(19) Europäisches Patentamt
European Patent Office
Office européen des brevets

(11) **EP 4 783 697 A1**

(12) **EUROPEAN PATENT APPLICATION**
published in accordance with Art. 153(4) EPC

(43) Date of publication:
**29.07.2026 Bulletin 2026/31**

(21) Application number: **23952509.0**

(22) Date of filing: **19.09.2023**

(51) International Patent Classification (IPC):
**H04W 72/0457** $^{(2023.01)}$

(52) Cooperative Patent Classification (CPC):
**H04W 72/0457**

(86) International application number:
**PCT/CN2023/119652**

(87) International publication number:
**WO 2025/059844 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **DU, Zhongda**
**Dongguan, Guangdong 523860 (CN)**

(74) Representative: **RGTH**
**Patentanwälte PartGmbB**
**Mönckebergstraße 11**
**20095 Hamburg (DE)**

(54) **METHOD FOR WIRELESS COMMUNICATION AND TERMINAL DEVICE**

(57) Provided are a method for wireless communication and a terminal device. The method comprises: a terminal device determines a first parameter on the basis of a resource allocation rate; and the terminal device allocates a first radio resource to a first logical channel on the basis of the first parameter, wherein the resource allocation rate is associated with the satisfaction of the first logical channel. According to the embodiments of the present application, in an LCP process, a parameter (i.e., the first parameter) used for allocating radio resources to logical channels is determined on the basis of a resource allocation rate, for example, a resource allocation rate associated with logical channels in a satisfactory state, and then the radio resources are allocated to the logical channels on the basis of the first parameter, thereby improving the fairness of a plurality of logical channels in a satisfactory state participating in resource allocation, or increasing the number of logical channels in a satisfactory state in the LCP process.

```
┌─────────────────────────────────────────────────┐
│ A terminal device determines a first parameter   │──── S310
│ based on a resource allocation rate               │
└─────────────────────────────────────────────────┘
                        │
┌─────────────────────────────────────────────────┐
│ The terminal device allocates a first radio       │──── S320
│ resource to a first logical channel based on the  │
│ first parameter                                   │
└─────────────────────────────────────────────────┘
```

FIG. 3

## Description

### TECHNICAL FIELD

This application relates to the field of communications technologies, and more specifically, to a method for wireless communication and a terminal device.

### BACKGROUND

In a related technology, shared resource blocks are allocated to a plurality of logical channels by using a logical channel prioritization (logical channel prioritization, LCP) procedure. However, in the LCP procedure, for example, in a second-round sub-procedure, considering only logical channel priorities may lead to unfairness in states of the plurality of logical channels. For example, a high-priority logical channel may be in a saturated state, while a low-priority logical channel may be in a state with a relatively low satisfaction level.

### SUMMARY

This application provides a method for wireless communication and a terminal device. The following describes the aspects related to this application.

According to a first aspect, there is provided a method for wireless communication. The method includes: determining, by a terminal device, a first parameter based on a resource allocation rate; and allocating, by the terminal device, a first radio resource to a first logical channel based on the first parameter, where the resource allocation rate is associated with a satisfaction level of the first logical channel.

According to a second aspect, there is provided a terminal device. The terminal device includes: a determining unit, configured to determine a first parameter based on a resource allocation rate, where the resource allocation rate is associated with a satisfaction level of a first logical channel; and an allocation unit, configured to allocate a first radio resource to the first logical channel based on the first parameter.

According to a third aspect, a terminal device is provided. The terminal device includes a processor, a memory, and a communications interface, where the memory is configured to store one or more computer programs, and the processor is configured to invoke the computer program in the memory, to cause the terminal device to execute some or all of the steps in the method according to the first aspect.

According to a fourth aspect, an embodiment of this application provides a communications system, where the system includes the foregoing terminal device. In another possible design, the system may further include another device that interacts with the terminal device in the solution provided in embodiments of this application.

According to a fifth aspect, an embodiment of this application provides a computer-readable storage medium, where the computer-readable storage medium stores a computer program, and the computer program causes a terminal to perform some or all of the steps in the method according to the first aspect.

According to a sixth aspect, an embodiment of this application provides a computer program product, where the computer program product includes a non-transitory computer-readable storage medium that stores a computer program, and the computer program is operable to cause a terminal to perform some or all of the steps of the method according to the first aspect. In some implementations, the computer program product may be a software installation package.

According to a seventh aspect, a computer program is provided, where the computer program causes a computer to execute the method according to the first aspect.

According to an eighth aspect, an embodiment of this application provides a chip, where the chip includes a memory and a processor, and the processor may invoke a computer program from the memory and run the computer program, to implement some or all of the steps described in the method according to the first aspect.

In embodiments of this application, in an LCP procedure, a parameter (that is, a first parameter) used for allocating a radio resource to a logical channel is determined based on a resource allocation rate, for example, a resource allocation rate associated with the logical channel in a satisfied state, and the radio resource is then allocated to the logical channel based on the first parameter, which is conducive to improving fairness among a plurality of logical channels participating in resource allocation in reaching the satisfied state, or in other words, is conducive to increasing a quantity of logical channels in the satisfied state in the LCP procedure.

### BRIEF DESCRIPTION OF DRAWINGS

FIG. 1 shows a wireless communications system 100 to which embodiments of this application are applied.

FIG. 2 is a schematic diagram of rate intervals and satisfaction levels of logical channels.

FIG. 3 is a schematic flowchart of a method for wireless communication according to an embodiment of this application.

FIG. 4 is a schematic diagram of a terminal device according to an embodiment of this application.

FIG. 5 is a schematic diagram of a structure of a communications apparatus according to an embodiment of this application.

## DESCRIPTION OF EMBODIMENTS

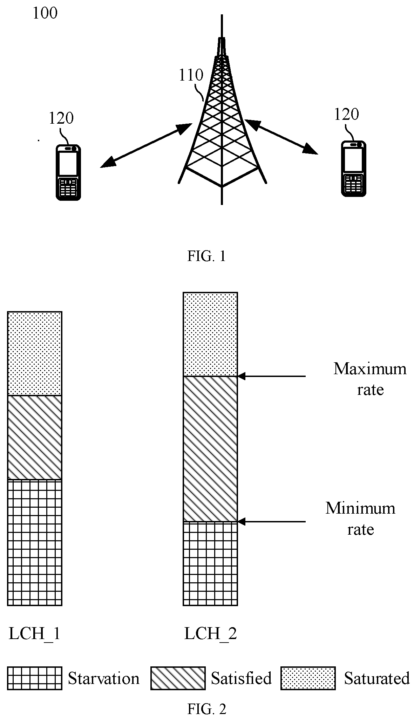

Technical solutions in this application are described below with reference to the accompanying drawings. For a better understanding of this application, a communications system to which embodiments of this application are applied is first described below with reference to FIG. 1.

FIG. 1 shows a wireless communications system 100 to which embodiments of this application are applied. The wireless communications system 100 may include a network device 110 and a terminal device 120. The network device 110 may be a device that communicates with the terminal device 120. The network device 110 may provide communication coverage for a specific geographic area, and may communicate with the terminal device 120 located within the coverage.

FIG. 1 exemplarily shows one network device and two terminals. Optionally, the wireless communications system 100 may include a plurality of network devices, and another quantity of terminal devices may be included in a coverage range of each network device, which is not limited in embodiments of this application.

Optionally, the wireless communications system 100 may further include another network entity such as a network controller or a mobility management entity, which is not limited in embodiments of this application.

It should be understood that the technical solutions of embodiments of this application may be applied to various communications systems, such as a 5th generation (5th generation, 5G) system or a new radio (new radio, NR) system, a long-term evolution (long term evolution, LTE) system, an LTE frequency division duplex (frequency division duplex, FDD) system, and an LTE time division duplex (time division duplex, TDD) system. The technical solutions provided in this application may further be applied to a future communications system, such as a 6th generation mobile communications system or a satellite communications system.

The terminal device in embodiments of this application may also be referred to as user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity, which provides a sidelink signal between UEs in V2X, D2D, or the like. For example, a cellular phone and a vehicle communicate with each other through a sidelink signal. A cellular phone and a smart home device communicate with each other, without relaying a communication signal through a base station.

The network device in embodiments of this application may be a device for communicating with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover devices having the following various names, or may be interchanged with the devices having the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNodeB MeNB, a secondary eNodeB SeNB, a multi-standard radio (MSR) node, a home base station, a network controller, an access node, a wireless node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), or machine-to-machine (machine-to-machine, M2M) communications, a network-side device in a 6G network, a device that functions as a base station in a future communications system, or the like. The base station may support networks of a same access technology or different access technologies. A specific technology and a specific device used by the network device are not limited in embodiments of this application.

The base station may be stationary or mobile. For example, a helicopter or an unmanned aerial vehicle may be configured to function as a mobile base station, and one or more cells may move depending on a location of the mobile base station. In another example, a helicopter or an unmanned aerial vehicle may be configured to serve as a device in communication with another base station.

In some deployments, the network device in embodiments of this application may be a CU or a DU, or the network device may include a CU and a DU. The gNB may further include an AAU.

The network device and the terminal device may be deployed on land, including being deployed indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

It should be understood that all or some of functions of the communications device in this application may alternatively be implemented by software functions running on hardware, or by virtualization functions instantiated on a platform (for example, a cloud platform).

For ease of understanding, related concepts and communication processes involved in embodiments of this application are described below.

### Token bucket algorithm

The token bucket algorithm (token bucket algorithm) is a traffic control algorithm commonly used for traffic control and rate limiting in network communication. The algorithm may ensure that a transmitting end transmits data at a fixed rate, and that a specific quantity of pieces of data may be processed under burst situations. A principle of the token bucket algorithm is described below.

The token bucket algorithm generally includes two parameters: a rate and a token bucket size. Tokens are generated at a fixed rate in a token bucket of a fixed size (that is, a token bucket size). Each token corresponds to permission to transmit data of a fixed size, for example, one token corresponds to permission to transmit one data packet. In a case in which no token is used, a quantity of tokens in the token bucket increases over time. However, when the quantity of tokens exceeds a size of the token bucket, excess tokens are discarded, that is, the quantity of tokens cannot exceed the size of the token bucket.

The quantity of tokens in the token bucket may be used to determine a quantity of pieces of data that can be transmitted. When there is data to be transmitted, the transmitting end is required to obtain a token from the token bucket. If a quantity of pieces of data to be transmitted is less than the quantity of tokens in the token bucket, all of the data to be transmitted is transmitted, and the quantity of tokens in the token bucket is updated at the same time, that is, an updated quantity of tokens is equal to an initial quantity of tokens minus a quantity of tokens used for transmitting the data. If a quantity of pieces of data to be transmitted is greater than the quantity of tokens in the token bucket, part of the data is transmitted, and a quantity of pieces of the data transmitted corresponds to the quantity of tokens in the token bucket, or the data is transmitted after waiting for a sufficient quantity of tokens to be generated in the token bucket. In addition, the quantity of tokens in the token bucket is updated, that is, an updated quantity of tokens is equal to an initial quantity of tokens minus a quantity of tokens used for transmitting the data.

An advantage of the token bucket algorithm is that a transmission rate can be limited, and the transmitting end can be prevented from transmitting excessive data that a receiving end cannot handle. In addition, the token bucket algorithm may handle burst situations, because there is a specific quantity of tokens in the token bucket, which may allow the transmitting end to transmit a specific quantity of pieces of data under burst situations.

The token bucket algorithm is widely used in practical applications, such as traffic control in network devices and request limiting in application program interfaces (application program interface, API). Different traffic limiting effects may be achieved by adjusting a token generation rate and a token bucket size.

When a terminal device is scheduled in an uplink direction, if a quantity of logical channels scheduled exceeds one, resource blocks are required to be shared between different logical channels for uplink data transmission. In a process in which resource blocks are shared between different logical channels, a logical channel priority is a relatively important parameter.

In a 3G system, such as WCDMA, of the 3rd generation partnership project (3rd generation partnership project, 3GPP), the logical channel priority is the only parameter used as a reference, that is, shared resource blocks are allocated to a plurality of logical channels based only on their logical channel priorities. A method (the method may include step 1 to step 3) for allocating shared resource blocks to a plurality of logical channels based on their logical channel priorities is described below by using two logical channels (LCH_1 and LCH_2) as an example.

It is assumed that priorities of LCH_1 and LCH_2 are respectively denoted as LCH1_P and LCH2_P (LCH1_P is higher than LCH2_P), amounts of data buffered to be transmitted on LCH_1 and LCH_2 at a specific instant are respectively denoted as LCH1_Buf and LCH2_Buf, and a size of radio resource blocks for allocation is a serving grant (serving grant, SG).

In step 1, the logical channels are sorted according to their priorities, that is, LCH_1 followed by LCH_2.

In step 2, radio resources are allocated in the order of the logical channel priorities, that is, radio resources are first allocated to LCH_1.

If SG ≤ LCH1_Buf, the entire SG is allocated to LCH_1, and the resource allocation process ends. Otherwise, step 3 is performed.

In step 3, remaining radio resources (that is, SG - LCH1_Buf) are allocated to LCH_2.

When a quantity of logical channels sharing resource blocks is greater than two, the foregoing method may also be used for resource allocation, that is, radio resources are allocated in order of logical channel priorities until all radio resources are allocated or the last logical channel is allocated a radio resource.

However, "starvation" may occur in the foregoing method. For example, when the SG is less than a total amount of data buffered for the logical channels, and there is always data buffered to be transmitted on a high-priority logical channel, a low-priority logical channel may fail to be scheduled or may be allocated a relatively small amount of radio resources. In this case, the low-priority logical channel may fail to meet a basic quality of service (quality of service, QoS) requirement, resulting in starvation. In other words, the low-priority logical channel may be in a starvation state.

For ease of understanding, the following describes a plurality of states of logical channels with reference to FIG. 2.

In a 3GPP system, there are two key parameters in QoS parameters of logical channels: one is a minimum rate (that is, a minimum rate required to complete a service), and the other is a maximum rate (that is, a rate at which a service can achieve satisfactory performance).

FIG. 2 is a schematic diagram of rate intervals and satisfaction levels of logical channels. Referring to FIG. 2, when a rate of a logical channel cannot reach the minimum rate, the logical channel is in a starvation state. When a rate of a logical channel exceeds the maximum rate, the logical channel is in a saturated state. When a rate of a logical channel is between the minimum rate and the maximum rate, the logical channel is in a satisfied state.

Still referring to FIG. 2, satisfaction levels of logical channels in the satisfied state may vary. For example, when a rate of a logical channel approaches the minimum rate, a satisfaction level of the logical channel is relatively low. When a rate of a logical channel approaches the maximum rate, a satisfaction level of the logical channel is relatively high. In other words, for a logical channel in the satisfied state, a greater rate of the logical channel indicates a higher satisfaction level of the logical channel.

In 4G and 5G systems of 3GPP, shared resource blocks may be allocated to a plurality of logical channels by using a logical channel prioritization (logical channel prioritization, LCP) procedure. The token bucket algorithm based on a logical channel prioritized bit rate (priority bit rate, PBR) is used in the LCP to solve the starvation problem. In other words, the logical channel prioritized bit rate is introduced and used as the rate parameter in the token bucket algorithm mentioned above, to control a quantity of resources to be allocated to a logical channel.

As mentioned above, when a rate of a logical channel cannot reach the minimum rate, the logical channel is in the starvation state. Therefore, the logical channel prioritized bit rate may be determined based on the minimum rate, which helps a logical channel participating in resource allocation reach the minimum rate, and further helps prevent the logical channel from being in the starvation state.

In the LCP procedure, a PBR and a token bucket (a size of the token bucket is PBR_BS) may be configured for each logical channel based on the minimum rate required by the QoS, and a token variable Bj may be configured locally for each logical channel. $Bj = Bj + PBR \times T$, and $Bj = \min(Bj, PBR\_BS)$. In other words, Bj accumulates over time at the rate of PBR. However, a maximum value of Bj does not exceed the size PBR_BS of the token bucket, and T denotes a time interval between two calculations of Bj.

In some embodiments, the LCP procedure may be divided into two rounds of sub-procedure, hereinafter referred to as step 1 and step 2, respectively. The LCP procedure described above using the token bucket algorithm is described still using LCH_1 and LCH_2 as an example.

In step 1, resource allocation for a first-round sub-procedure is performed. During the resource allocation for this sub-procedure, resources are allocated to logical channels based on their logical channel priorities in combination with token variables associated with PBRs.

Resources are first allocated to LCH_1 having a relatively high priority, according to a formula as follows.

$$LCH1\_ASG = \min(SG, LCH1\_Bj, LCH1\_Buf),$$

where LCH1_ASG denotes radio resources allocated to LCH_1; LCH1_Bj denotes a token variable corresponding to LCH_1; and LCH1_Buf denotes data buffered for LCH_1, and may indicate an amount of data to be transmitted on LCH_1.

Based on the resource allocation result, a size of resources for allocation, the amount of data to be transmitted on LCH_1, and the token variable corresponding to LCH_1 may be updated, that is, each of which minus a size of the resources allocated. For example, the size of resources for allocation, the amount of data to be transmitted on LCH_1, and the token variable corresponding to LCH_1 may be respectively updated according to the following formulas:

$$SG = SG - LCH1\_ASG;$$

$$LCH1\_Bj = LCH1\_Bj - LCH1\_ASG;$$

and

$$LCH1\_Buf = LCH1\_Buf - LCH1\_ASG.$$

In this case, if there are remaining resources in SG, resources are then allocated to LCH_2 according to a formula as follows.

$$LCH2\_ASG = min(SG, LCH2\_Bj, LCH2\_Buf),$$

where LCH2_ASG denotes radio resources allocated to LCH_2; LCH2_Bj denotes a token variable corresponding to LCH_2; and LCH2_Buf denotes data buffered for LCH_2, and may indicate an amount of data to be transmitted on LCH_2.

Based on the resource allocation result, a size of resources for allocation, the amount of data to be transmitted on LCH_2, and the token variable corresponding to LCH_2 may be updated, that is, each of which minus a size of the resources allocated. For example, the size of resources for allocation, the amount of data to be transmitted on LCH_2, and the token variable corresponding to LCH_2 may be respectively updated according to the following formulas:

$$SG = SG - LCH2\_ASG;$$

$$LCH2\_Bj = LCH2\_Bj - LCH2\_ASG;$$

and

$$LCH2\_Buf = LCH2\_Buf - LCH2\_ASG.$$

In this case, if the SG is still greater than 0, it indicates that there are still remaining resources to be allocated, and step 2 is performed.

In step 2, resources are allocated to LCH1 and LCH2 based on their logical channel priorities, until all radio resources are allocated or LCH2 is allocated resources. The resource allocation method in this step is the same as the method for resource allocation based only on a logical channel priority in the 3G system described above.

The LCP procedure described above is also applicable to a case in which a quantity of logical channels sharing resource blocks is greater than two, that is, the LCP procedure described above is applied to a resource allocation process of a plurality of logical channels in order of their logical channel priorities.

It may be learned that, in the LCP procedure described above, a size of radio resources that can be allocated to a logical channel is controlled by a token variable associated with a prioritized bit rate. For example, a size of radio resources that can be allocated to a high-priority logical channel is limited, thereby allowing a low-priority logical channel to be allocated radio resources. In addition, since the prioritized bit rate is determined based on the minimum rate, a resource allocation process of a logical channel is controlled by using the token variable associated with the prioritized bit rate, which is conducive to preventing the logical channel from being in the starvation state, or in other words, is conducive to reducing a quantity of logical channels in the starvation state.

The LCP procedure described above overcomes the foregoing starvation problem. However, in the LCP procedure, for example, in a second-round sub-procedure, considering only logical channel priorities may lead to unfairness in states of the plurality of logical channels. For example, a high-priority logical channel may be in the saturated state, while a low-priority logical channel may be in a state with a relatively low satisfaction level. The following describes the unfairness phenomenon.

In the 3GPP 3G system, only the logical channel priority is considered, which results in starvation, that is, a low-priority logical channel may consistently fail to reach the minimum rate. In contrast, in the 4G and 5G systems, both the logical channel priority and the PBR corresponding to the minimum rate are considered, thereby essentially avoiding starvation.

However, in step 2 of the LCP procedure described above, the remaining radio resources are allocated using the same algorithm as that used in the 3G system. In other words, in step 2, the remaining radio resources are allocated based only on logical channel priorities. As a result, the following case may occur: a high-priority logical channel (for example, LCH_1 on the left in FIG. 2) has already reached the saturated state, while a low-priority logical channel (for example, LCH_2 on the right in FIG. 2) is still in a state with a relatively low satisfaction level. This phenomenon is the "unfairness" phenomenon described above, or in other words, there is unfairness in the satisfaction levels of logical channels.

In addition, the "unfairness" phenomenon is unrelated to a quantity of logical channels participating in allocation of shared resource blocks. In other words, when the quantity of logical channels participating in allocation of shared resource blocks is greater than two, the unfairness phenomenon described above may also occur. When the quantity of logical channels participating in allocation of shared resource blocks increases, the unfairness phenomenon described above may become more severe.

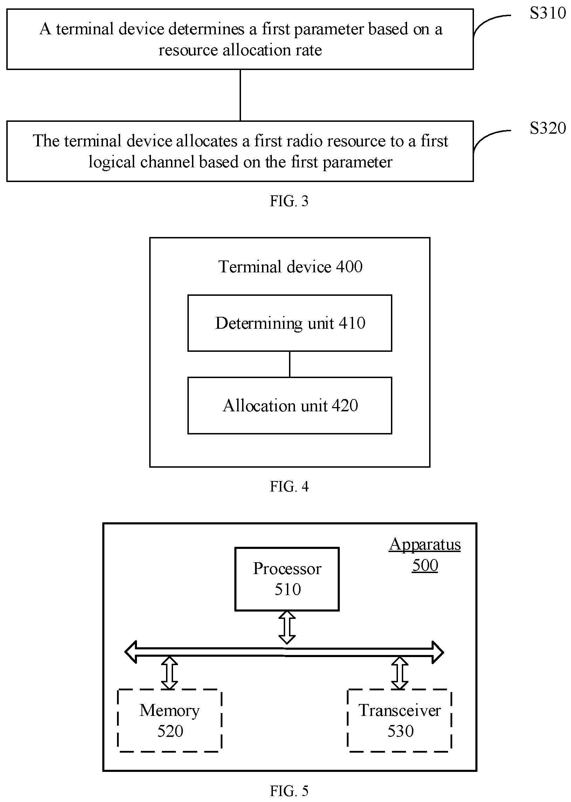

To solve the foregoing problems, an embodiment of this application provides a method for wireless communication. According to the method, in the LCP procedure, a parameter (that is, a first parameter) used for allocating a radio resource to a logical channel is determined based on a resource allocation rate, for example, a resource allocation rate associated with a satisfaction level of the logical channel, and the radio resource is then allocated to the logical channel based on the first parameter, which is conducive to improving fairness among a plurality of logical channels participating in resource allocation in reaching the satisfied state, or in other words, is conducive to increasing a quantity of logical channels in the satisfied state in the LCP procedure. A communication method according to an embodiment of this application is described below with reference to FIG. 3.

FIG. 3 is a schematic flowchart of a method for wireless communication according to an embodiment of this application. The method shown in FIG. 3 includes step S310 and step S320.

In step S310, a terminal device determines a first parameter based on a resource allocation rate.

The resource allocation rate may be, for example, a resource allocation rate associated with a satisfaction level of a first logical channel, thereby being conducive to avoiding the foregoing unfairness problem in satisfaction levels of logical channels. In some embodiments, the terminal device may receive the resource allocation rate transmitted or indicated by a network device.

Since a satisfaction level of a logical channel is related to the minimum rate and the maximum rate in the QoS parameters of the logical channel, the resource allocation rate may be associated with the minimum rate and/or the maximum rate.

In some embodiments, the resource allocation rate may include a satisfying bit rate (for example, satisfying bit rate, SBR). The satisfying bit rate may be associated with the maximum rate and/or the minimum rate mentioned above.

For example, the satisfying bit rate may be determined based on the maximum rate. For example, the satisfying bit rate may be the maximum rate. As mentioned above, for a logical channel in the satisfied state, a rate of the logical channel closer to the maximum rate indicates a higher satisfaction level of the logical channel. Therefore, determining the satisfying bit rate based on the maximum rate is conducive to improving fairness among a plurality of logical channels participating in resource allocation in reaching the satisfied state, and is also conducive to increasing satisfaction levels of the plurality of logical channels participating in resource allocation.

For another example, the satisfying bit rate may be greater than the minimum rate and less than the maximum rate. In other words, the satisfying bit rate is a value between the minimum rate and the maximum rate, so as to improve flexibility in resource allocation. The determination of the value of the satisfying bit rate may be, for example, related to a size of resources to be allocated, an amount of data to be transmitted on a logical channel, a priority of the logical channel, a service type of the data to be transmitted on the logical channel, and the like.

In some embodiments, the resource allocation rate may include an incremental bit rate (for example, delta_BR). The incremental bit rate may be associated with one or more of the maximum rate, the minimum rate, or the prioritized bit rate mentioned above. For example, the resource allocation rate may be a difference between the maximum rate and the prioritized bit rate. For another example, the resource allocation rate may be a difference between a value within a range from the minimum rate to the maximum rate and the prioritized bit rate. In an example, the incremental bit rate may be determined based on the satisfying bit rate and the prioritized bit rate. For example, the incremental bit rate is a difference between the satisfying bit rate and the prioritized bit rate.

In some embodiments, the first parameter may be determined based on the resource allocation rate. The first parameter may be a parameter for allocating resources to a logical channel. For example, the first parameter may be determined based on the resource allocation rate and the token bucket algorithm, for example, the first parameter (an updated value) is equal to the first parameter (an initial value) plus a product of the resource allocation rate and T. The first parameter may be a token variable (used to indicate a quantity of tokens in a token bucket) in the token bucket algorithm, and the resource allocation rate may be the rate parameter in the token bucket algorithm mentioned above. Since the token variable is periodically updated, the token variable may be calculated at an interval of one period T, that is, T denotes a time interval between two consecutive calculations of the first parameter.

In step S320, the terminal device allocates a first radio resource to a first logical channel based on the first parameter.

There are a plurality of methods for the terminal device to allocate radio resources to the first logical channel based on the first parameter. For example, the first radio resource may be allocated to the first logical channel by using the token bucket algorithm mentioned above. The first parameter may be, for example, the token variable in the token bucket algorithm, and the resource allocation rate may be the rate parameter in the token bucket algorithm. In the process of allocating radio resources by using the token bucket algorithm, the first parameter may indicate a quantity of resources that can be allocated to the logical channel, or an upper limit of a quantity of resources that can be allocated to the logical channel.

In some embodiments, the terminal device allocating the first radio resource to the first logical channel based on the first parameter may be applied to the LCP procedure mentioned above, for example, may be applied to the second-round sub-procedure in the LCP procedure, that is, step 2 in the LCP procedure mentioned above. In other words, in the second-round sub-procedure in the LCP procedure, the terminal device may allocate radio resources to the first logical channel based on the first parameter.

It should be noted that the first logical channel may be one of logical channels participating in resource allocation. For example, the first logical channel may be LCH_1 mentioned above, or may be LCH_2 mentioned above.

In embodiments of this application, the first parameter for allocating a radio resource to a logical channel is determined based on a resource allocation rate, for example, a resource allocation rate associated with a satisfaction level of the logical channel, and the radio resource is then allocated to the first logical channel based on the first parameter, thereby being conducive to improving fairness among logical channels participating in resource allocation in reaching the satisfied state. For example, in a case in which radio resources are sufficient, this method helps the logical channels participating in resource allocation to reach the satisfied state, or in other words, the logical channels participating in resource allocation are allowed to enter the saturated state only after the logical channels are all in the satisfied state. In a case in which radio resources are insufficient, this method helps improve a quantity of logical channels in the satisfied state among the logical channels participating in resource allocation.

In some embodiments, the first parameter may include a first token variable. The first token variable may be determined, for example, based on the satisfying bit rate mentioned above. For example, the first token variable may be associated with one or more of the following: the satisfying bit rate, a size of a first token bucket, or the time interval between two consecutive calculations of the first parameter (which may refer to the first token variable here). In an example, the first token variable meets the following formulas:

$$Bk = Bk + SBR \times T, \text{ and } Bk = \min(Bk, SBR\_BS).$$

In which, Bk denotes the first token variable, SBR denotes the satisfying bit rate, SBR_BS denotes the size of the first token bucket, T denotes a time interval between two calculations of the first parameter, and min denotes obtaining a minimum value.

In other words, a value of the first token variable Bk increases over time as a function of the satisfying bit rate SBR. However, the value of the first token variable Bk cannot exceed the size SBR_BS of the first token bucket. When the value of the first token variable Bk exceeds the size SBR_BS of the first token bucket, the value of the first token variable Bk is the size SBR_BS of the first token bucket.

In some embodiments, the first radio resource may be associated with one or more of allocable radio resources, the amount of data to be transmitted on the first logical channel, or the first token variable. For example, the size of the first radio resource may be a minimum value of the allocable radio resources, the amount of data to be transmitted on the first logical channel, and the first token variable.

In an example, the first radio resource may meet the following formula:

$$LCH1\_ASG1 = \min(SG, Bk, LCH1\_Buf).$$

In which, LCH1_ASG1 denotes the first radio resource, Bk denotes the first token variable, SG denotes the allocable radio resources, LCH1_Buf is used to indicate an amount of data to be transmitted on the first logical channel, and min denotes obtaining a minimum value.

In other words, in a case in which the allocable radio resources are sufficient, the size of the first radio resource cannot exceed the value of the first token variable. If the first token variable is less than the amount of data to be transmitted on the first logical channel, the size of the first radio resource is equal to the value of the first token variable. In a case in which the allocable radio resources are insufficient, the size of the first radio resource cannot exceed a size of the allocable radio resources.

Determining the size of the first radio resource based on the first token variable helps the first logical channel reach the satisfied state, thereby being conducive to improving fairness among a plurality of logical channels participating in resource allocation in reaching the satisfied state.

In some embodiments, after the terminal device allocates the first radio resource to the first logical channel based on the first parameter, the first token variable may be updated. For example, the first token variable may be updated according to the following formula: Bk = Bk - LCH1_ASG1, where LCH1_ASG1 denotes the first radio resource. In other words, after the first radio resource is allocated to the first logical channel, it is necessary to subtract a size of the allocated first radio resource from the first token variable.

In some embodiments, after the terminal device allocates the first radio resource to the first logical channel based on the first parameter, the allocable radio resources and the amount of data to be transmitted on the first logical channel may be updated to facilitate next resource allocation. For example, the amount of data to be transmitted on the first logical channel and the allocable radio resources may be updated according to the following formulas: LCH1_Buf = LCH1_Buf - LCH1_ASG1; and SG = SG - LCH1_ASG1.

The method for allocating radio resources based on the satisfying bit rate is described above, and a method for allocating radio resources based on the incremental bit rate is described below.

In some embodiments, the first parameter may include a second token variable. The second token variable may be determined, for example, based on the incremental bit rate.

In some embodiments, the second token variable may be associated with one or more of the following: the incremental bit rate, a size of a second token bucket, or the time interval between two consecutive calculations of the first parameter (which may refer to the second token variable here). For example, the second token variable meets the following formulas:

$$Bd = Bd + delta\_BR \times T, \text{ and } Bd = min(Bd, delta\_BS).$$

In which, delta_BR denotes the incremental bit rate, delta_BS denotes the size of the second token bucket, T denotes the time interval between two calculations of the first parameter, and min denotes obtaining a minimum value.

In other words, a value of the second token variable Bd increases over time as a function of the incremental bit rate delta_BR. However, the value of the second token variable Bd cannot exceed the size delta_BS of the second token bucket. When the value of the second token variable Bd exceeds the size delta_BS of the second token bucket, the value of the second token variable Bd is the size delta_BS of the second token bucket.

In some embodiments, the first radio resource may be associated with one or more of allocable radio resources, the amount of data to be transmitted on the first logical channel, or the second token variable. For example, the size of the first radio resource may be a minimum value of the allocable radio resources, the amount of data to be transmitted on the second logical channel, and the second token variable. For example, the first radio resource meets the following formula:

$$LCH1\_ASG1 = min(SG, Bd, LCH1\_Buf).$$

In which, LCH1_ASG1 denotes the first radio resource, Bd denotes the first token variable, SG denotes allocable radio resources, LCH1_Buf is used to indicate an amount of data to be transmitted on the first logical channel, and min denotes obtaining a minimum value.

In other words, in a case in which the allocable radio resources are sufficient, the size of the first radio resource cannot exceed the value of the second token variable. If the second token variable is less than the amount of data to be transmitted on the first logical channel, the size of the first radio resource is equal to the value of the second token variable. In a case in which the allocable radio resources are insufficient, the size of the first radio resource cannot exceed a size of the allocable radio resources.

In some embodiments, after the terminal device allocates the first radio resource to the first logical channel based on the first parameter, the second token variable may be updated. For example, the second token variable may be updated according to the following formula: Bd = Bd - LCH1_ASG1, where LCH1_ASG1 denotes the first radio resource. In other words, after the first radio resource is allocated to the first logical channel, it is necessary to subtract a size of the allocated first radio resource from the second token variable.

In some embodiments, after the terminal device allocates the first radio resource to the first logical channel based on the first parameter, the allocable radio resources and the amount of data to be transmitted on the first logical channel may be updated to facilitate next resource allocation. For example, the amount of data to be transmitted on the first logical channel and the allocable radio resources may be updated according to the following formulas:

$$LCH1\_Buf = LCH1\_Buf - LCH1\_ASG1;$$

and

$$SG = SG - LCH1\_ASG1.$$

In which, LCH1_ASG1 denotes the first radio resource, LCH1_Buf is used to indicate the amount of data to be transmitted on the first logical channel, and SG denotes the allocable radio resources.

In some embodiments, before the radio resource is allocated to the first logical channel based on the first parameter, a radio resource may be first allocated to a logical channel based on a prioritized bit rate. For example, in the LCP procedure mentioned above that includes two rounds of sub-procedure, the method provided in embodiments of this application may be, for example, applied to the second-round sub-procedure. In other words, before the radio resource is allocated to the first logical channel based on the first parameter, a radio resource may be allocated to a logical channel through the first-round sub-procedure of the LCP.

In other words, the first radio resource is a resource allocated by the terminal device to the first logical channel from the allocable radio resources described above. The allocable radio resources are radio resources remaining after the terminal device allocates radio resources to a plurality of logical channels based on prioritized bit rates of the plurality of logical channels. The plurality of logical channels include the first logical channel.

In this case, in the first-round sub-procedure of the LCP, that is, after the terminal device allocates radio resources to a plurality of logical channels based on prioritized bit rates of the plurality of logical channels, related parameters in the radio resource allocation method mentioned above based on the resource allocation rate are required to be updated. The following describes methods for updating related parameters in a case in which the resource allocation rate is a satisfying bit rate and in a case in which the resource allocation rate is an incremental bit rate.

When a resource allocation process of logical channels includes a plurality of rounds of allocation, satisfaction levels of the logical channels are associated with a result of each of the plurality of rounds of allocation. In other words, in the resource allocation process, the results of the plurality of rounds of resource allocation of the logical channels jointly determine the satisfaction levels of the logical channels. Therefore, when the resource allocation rate is the satisfying bit rate, the first token variable is required to be updated in each of the plurality of rounds of allocation. For example, the first token variable is required to be updated in each of the first-round sub-procedure and the second-round sub-procedure of the LCP.

In some embodiments, assuming that a resource allocated by the terminal device to the first logical channel based on a prioritized bit rate is a second radio resource, the first token variable may be updated according to the following formula: Bk = Bk - LCH1_ASG2, where Bk denotes the first token variable, and LCH_ASG2 denotes the second radio resource. The second radio resource mentioned herein may be, for example, LCH1_ASG or LCH2_ASG mentioned above.

Since the incremental bit rate may be a difference between the satisfying bit rate and the prioritized bit rate, that is, the incremental bit rate applies only to a current round of resource allocation (for example, the second-round sub-procedure of the LCP), when the resource allocation rate is the incremental bit rate, the second token variable is not required to be updated in the first-round sub-procedure of the LCP, and is only required to be updated in the second-round sub-procedure, thereby simplifying the implementation.

In some embodiments, in the first-round sub-procedure of the LCP, the allocable radio resources and the amount of data to be transmitted on the first logical channel mentioned above are required to be updated. Still assuming that a resource allocated by the terminal device to the first logical channel based on the prioritized bit rate is the second radio resource, the amount of data to be transmitted on the first logical channel and the allocable radio resources may be updated according to the following formulas:

$$LCH1\_Buf = LCH1\_Buf - LCH1\_ASG2;$$

and

$$SG = SG - LCH1\_ASG2.$$

In which, LCH1_Buf is used to indicate the amount of data to be transmitted on the first logical channel, SG denotes the allocable radio resources, and LCH1_ASG2 denotes the second radio resource.

It should be noted that the first logical channel may be one of a plurality of logical channels participating in radio resource allocation. When there are a plurality of logical channels participating in radio resource allocation, radio resources may be allocated to the logical channels in order of priorities of the logical channels. For example, if logical channels participating in radio resource allocation include the first logical channel and a second logical channel, radio resources are first allocated to the first logical channel, and then radio resources are allocated to the second logical channel, where a priority of the first logical channel is higher than that of the second logical channel.

The method provided in embodiments of this application is described in conjunction with a complete LCP procedure (which may include step 1 to step 3 below) by using an example in which the foregoing method for wireless communication is applied to the second-round sub-procedure of the LCP procedure.

## Embodiment 1

In Embodiment 1, a method for allocating radio resources to logical channels based on satisfying bit rates is described.

It is assumed that the logical channels LCH_1 and LCH_2 are participating in allocation of radio resources SG, priorities of LCH_1 and LCH_2 are respectively denoted as LCH1_P and LCH2_P (LCH1_P is higher than LCH2_P), and amounts of data buffered to be transmitted on LCH_1 and LCH_2 at a specific instant are respectively denoted as LCH1_Buf and LCH2_Buf.

In step 1, radio resources are allocated to LCH_1 and LCH_2 based on their prioritized bit rates.

First, radio resources are allocated to LCH_1 based on its prioritized bit rate in combination with the token bucket algorithm, and related parameters are updated accordingly according to the following formulas. As mentioned above, the first token variable is required to be updated in the first-round sub-procedure of the LCP.

$$LCH1\_ASG = min(SG, LCH1\_Bj, LCH\_Buf1);$$

$$SG = SG - LCH1\_ASG;$$

$$LCH1\_Bj = LCH1\_Bj - LCH1\_ASG;$$

$$LCH1\_Buf = LCH1\_Buf - LCH1\_ASG;$$

and

$$LCH1\_Bk = LCH1\_Bk - LCH1\_ASG.$$

In which, LCH1_ASG denotes radio resources allocated to LCH_1 in a current round of allocation; LCH1_Bj denotes a token variable corresponding to LCH_1, and is associated with the prioritized bit rate of LCH_1; LCH1_Buf denotes data buffered for LCH_1, and may indicate an amount of data to be transmitted on LCH_1; and LCH1_Bk denotes the first token variable of LCH_1, and may be associated with a satisfying bit rate of LCH_1.

Second, if there are remaining radio resources in SG, radio resources are allocated to LCH_2, and related parameters are updated according to the following formulas. As mentioned above, the first token variable is required to be updated in the first-round sub-procedure of the LCP.

$$LCH2\_ASG = min(SG, LCH2\_Bj, LCH\_Buf2);$$

$$SG = SG - LCH2\_ASG;$$

$$LCH2\_Bj = LCH2\_Bj - LCH2\_ASG;$$

$$LCH2\_Buf = LCH2\_Buf - LCH2\_ASG;$$

and

$$LCH2\_Bk = LCH2\_Bk - LCH2\_ASG.$$

In which, LCH2_ASG denotes radio resources allocated to LCH_2 in a current round of allocation; LCH2_Bj denotes a token variable corresponding to LCH_2, and is associated with the prioritized bit rate of LCH_2; LCH2_Buf denotes data buffered for LCH_2, and may indicate an amount of data to be transmitted on LCH_2; and LCH2_Bk denotes the first token variable of LCH_2, and may be associated with a satisfying bit rate of LCH_2.

Finally, if there are remaining radio resources in SG, step 2 is performed.

In step 2, radio resources are allocated to LCH_1 and LCH_2 based on their resource allocation rates.

First, radio resources are allocated to LCH_1 based on its satisfying bit rate, and related parameters are updated according to the following formulas:

$$LCH1\_ASG = min(SG, LCH1\_Bk, LCH\_Buf1);$$

$$SG = SG - LCH1\_ASG;$$

$$LCH1\_Buf = LCH1\_Buf - LCH1\_ASG;$$

and

$$LCH1\_Bk = LCH1\_Bk - LCH1\_ASG.$$

In which, LCH1_ASG denotes radio resources allocated to LCH_1 in a current round of allocation; LCH1_Buf denotes data buffered for LCH_1, and may indicate an amount of data to be transmitted on LCH_1; and LCH1_Bk denotes the first token variable of LCH_1, and may be associated with a satisfying bit rate of LCH_1.

It should be noted that, in a resource allocation process in this step, all related parameters used are parameters updated in step 1. For example, SG denotes allocable radio resources remaining after completion of the resource allocation in the first-round sub-procedure (namely, step 1), and LCH1_Bk denotes a token variable obtained after an amount of the radio resources allocated in the first-round sub-procedure is subtracted.

Second, if there are remaining radio resources in SG, radio resources are allocated to LCH_2 based on its satisfying bit rate, and related parameters are updated according to the following formulas:

$$LCH2\_ASG = min(SG, LCH2\_Bk, LCH\_Buf2);$$

$$SG = SG - LCH2\_ASG;$$

$$LCH2\_Buf = LCH2\_Buf - LCH2\_ASG;$$

and

$$LCH2\_Bk = LCH2\_Bk - LCH2\_ASG.$$

In which, LCH2_ASG denotes radio resources allocated to LCH_2 in a current round of allocation; LCH2_Buf denotes data buffered for LCH_2, and may indicate an amount of data to be transmitted on LCH_2; and LCH2_Bk denotes the first token variable of LCH_2, and may be associated with a satisfying bit rate of LCH_2.

It should be noted that, in a resource allocation process in this step, all related parameters used are parameters updated in step 1. For example, SG denotes allocable radio resources remaining after completion of the resource allocation in the first-round sub-procedure (namely, step 1), and LCH2_Bk denotes a token variable obtained after an amount of the radio resources allocated in the first-round sub-procedure is subtracted.

Finally, if there are remaining radio resources in SG, step 3 is performed.

In step 3, radio resources are allocated to LCH_1 and LCH_2 based on their logical channel priorities, until all radio resources in SG are allocated or LCH2 is allocated a radio resource.

It may be learned that the first token variable, the amount of data to be transmitted, and the allocable radio resources are all updated each time after the first logical channel is allocated radio resources. For example, the first token variable, the amount of data to be transmitted, and the allocable radio resources are all updated in each of the first-round sub-procedure and the second-round sub-procedure. In other words, the first token variable, the amount of data to be transmitted, and the allocable radio resources are updated in response to allocating radio resources to the first logical channel.

Allocating radio resources to logical channels based on their satisfying bit rates helps solve the unfairness mentioned above.

In a related technology, the LCP procedure further includes some principles, such as avoiding segmentation of a radio link control (radio link control, RLC) service data unit (service data unit, SDU) as much as possible.

Transmission of an RLC SDU on a logical channel is used as an example. When radio resources are sufficient and an amount of data to be transmitted is greater than a token variable, according to the related technology described above, a size of radio resources to be allocated to the logical channel should be equal to a value of the first token variable. However, this may result in segmentation of the RLC SDU. Therefore, radio resources may be allocated to the logical channel based on the amount of data to be transmitted (for example, a size of the RLC SDU). In other words, some additional radio resources are allocated to the logical channel, so as to multiplex a relatively large RLC SDU into a medium access control (media access control, MAC) packet data unit (packet data unit, PDU), thereby avoiding segmentation of the RLC SDU.

In this way, in step 1, after radio resources are allocated to the logical channel, an updated value of its token variable (a token variable associated with a prioritized bit rate, such as Bj) may be less than zero. Since the first token variable is updated in the first-round sub-procedure, and radio resources are allocated based on the first token variable updated in the second-round sub-procedure, performing resource allocation based on the satisfying bit rate may, to some extent, mitigate a problem caused by the updated value of the token variable (such as Bj) being less than zero.

## Embodiment 2

In Embodiment 2, a method for allocating radio resources to logical channels based on their incremental bit rates is described.

It is assumed that the logical channels LCH_1 and LCH_2 are participating in allocation of radio resources SG, priorities of LCH_1 and LCH_2 are respectively denoted as LCH1_P and LCH2_P (LCH1_P is higher than LCH2_P), and amounts of data buffered to be transmitted on LCH_1 and LCH_2 at a specific instant are respectively denoted as LCH1_Buf and LCH2_Buf.

In step 1, radio resources are allocated to LCH_1 and LCH_2 based on their prioritized bit rates.

First, radio resources are allocated to LCH_1 based on its prioritized bit rate in combination with the token bucket algorithm, and related parameters are updated accordingly according to the following formulas:

$$LCH1\_ASG = min(SG, LCH1\_Bj, LCH\_Buf1);$$

$$SG = SG - LCH1\_ASG;$$

$$LCH1\_Bj = LCH1\_Bj - LCH1\_ASG;$$

and

$$LCH1\_Buf = LCH1\_Buf - LCH1\_ASG.$$

In which, LCH1_ASG denotes radio resources allocated to LCH_1 in a current round of allocation; LCH1_Bj denotes a token variable corresponding to LCH_1, and is associated with the prioritized bit rate of LCH_1; and LCH1_Buf denotes data buffered for LCH_1, and may indicate an amount of data to be transmitted on LCH_1.

Second, if there are remaining radio resources in SG, radio resources are allocated to LCH_2, and related parameters are updated according to the following formulas:

$$LCH2\_ASG = min(SG, LCH2\_Bj, LCH\_Buf2);$$

$$SG = SG - LCH2\_ASG;$$

$$LCH2\_Bj = LCH2\_Bj - LCH2\_ASG;$$

and

$$LCH2\_Buf = LCH2\_Buf - LCH2\_ASG.$$

In which, LCH2_ASG denotes radio resources allocated to LCH_2 in a current round of allocation; LCH2_Bj denotes a token variable corresponding to LCH_2, and is associated with the prioritized bit rate of LCH_2; and LCH2_Buf denotes data buffered for LCH_2, and may indicate an amount of data to be transmitted on LCH_2.

Finally, if there are remaining radio resources in SG, step 2 is performed.

In step 2, radio resources are allocated to LCH_1 and LCH_2 based on their resource allocation rates.

First, radio resources are allocated to LCH_1 based on an incremental bit rate of LCH_1, and related parameters are updated according to the following formulas:

$$LCH1\_ASG = min(SG,LCH1\_Bd,LCH\_Buf1);$$

$$SG = SG - LCH1\_ASG;$$

$$LCH1\_Buf = LCH1\_Buf - LCH1\_ASG;$$

and

$$LCH1\_Bd = LCH1\_Bd - LCH1\_ASG.$$

In which, LCH1_ASG denotes radio resources allocated to LCH_1 in a current round of allocation; LCH1_Buf denotes data buffered for LCH_1, and may indicate an amount of data to be transmitted on LCH_1; and LCH1_Bd denotes the second token variable of LCH_1, and may be associated with an incremental bit rate of LCH_1.

It should be noted that, in a resource allocation process in this step, all related parameters used are parameters updated in step 1. For example, SG denotes allocable radio resources remaining after completion of the resource allocation in the first-round sub-procedure (namely, step 1).

Second, if there are remaining radio resources in SG, radio resources are allocated to LCH_2 based on an incremental bit rate of LCH_2, and related parameters are updated according to the following formulas:

$$LCH2\_ASG = min(SG,LCH2\_Bd,LCH\_Buf2);$$

$$SG = SG - LCH2\_ASG;$$

$$LCH2\_Buf = LCH2\_Buf - LCH2\_ASG;$$

and

$$LCH2\_Bd = LCH2\_Bd - LCH2\_ASG.$$

In which, LCH2_ASG denotes radio resources allocated to LCH_2 in a current round of allocation; LCH2_Buf denotes data buffered for LCH_2, and may indicate an amount of data to be transmitted on LCH_2; and LCH2_Bd denotes the second token variable of LCH_2, and may be associated with an incremental bit rate of LCH_2.

It should be noted that, in a resource allocation process in this step, all related parameters used are parameters updated in step 1. For example, SG denotes allocable radio resources remaining after completion of the resource allocation in the first-round sub-procedure (namely, step 1).

Finally, if there are remaining radio resources in SG, step 3 is performed.

In step 3, radio resources are allocated to LCH_1 and LCH_2 based on their logical channel priorities, until all radio resources in SG are allocated or LCH_2 is allocated a radio resource.

It may be learned that the amount of data to be transmitted and the allocable radio resources are both updated each time after the first logical channel is allocated radio resources. However, the second token variable is updated only in the second-round sub-procedure. Allocating radio resources to logical channels based on their incremental bit rates not only helps solve the unfairness mentioned above, but also simplifies implementation.

The methods embodiments of this application are described in detail above with reference to FIG. 1 to FIG. 3. The apparatus embodiments of this application are described in detail below with reference to FIG. 4 and FIG. 5. It should be understood that the descriptions of the method embodiments correspond to descriptions of the apparatus embodiments, and therefore, for parts that are not described in detail, reference may be made to the foregoing method embodiments.

FIG. 4 is a schematic diagram of a terminal device according to an embodiment of this application. The terminal device shown in FIG. 4 includes a determining unit 410 and an allocation unit 420.

The determining unit 410 is configured to determine a first parameter based on a resource allocation rate, where the resource allocation rate is associated with a satisfaction level of a first logical channel.

The allocation unit 420 is configured to allocate a first radio resource to the first logical channel based on the first parameter.

In some embodiments, the resource allocation rate includes a satisfying bit rate, the first parameter includes a first token variable, and the determining the first parameter based on the resource allocation rate includes: the first token variable meeting formulas as follows: $Bk = Bk + SBR \times T$, and $Bk = min(Bk,SBR\_BS)$. In which, Bk denotes the first token variable, SBR denotes the satisfying bit rate, SBR_BS denotes a size of a first token bucket, T denotes a time interval between two calculations of the first parameter, and min denotes obtaining a minimum value.

In some embodiments, the allocating the first radio resource to the first logical channel based on the first parameter includes: the first radio resource meeting a formula as follows: $LCH1\_ASG1 = min(SG,Bk,LCH1\_Buf)$. In which, LCH1_ASG1 denotes the first radio resource, SG denotes allocable radio resources, LCH1_Buf is used to indicate an amount of data to be transmitted on the first logical channel, and min denotes obtaining a minimum value.

In some embodiments, the device further includes: a first updating unit, configured to: after the allocating the first radio resource to the first logical channel based on the first parameter, update the first token variable according to a formula as follows: $Bk = Bk - LCH1\_ASG1$.

In some embodiments, the device further includes: a second updating unit, configured to: after the allocating the first radio resource to the first logical channel based on the first parameter, update the amount of data to be transmitted on the first logical channel and the allocable radio resources according to formulas as follows: $LCH1\_Buf = LCH1\_Buf - LCH1\_ASG1$; and $SG = SG - LCH1\_ASG1$.

In some embodiments, the resource allocation rate includes an incremental bit rate, the first parameter includes a second token variable, and the determining the first parameter based on the resource allocation rate includes: the second token variable meeting formulas as follows: $Bd = Bd + delta\_BR \times T$, and $Bd = min(Bd,delta\_BS)$. In which, delta_BR denotes the incremental bit rate, delta_BS denotes a size of a second token bucket, T denotes a time interval between two calculations of the first parameter, and min denotes obtaining a minimum value.

In some embodiments, the allocating the first radio resource to the first logical channel based on the first parameter includes: the first radio resource meeting a formula as follows: $LCH1\_ASG1 = min(SG,Bd,LCH1\_Buf)$. In which, LCH1_ASG1 denotes the first radio resource, SG denotes allocable radio resources, LCH1_Buf is used to indicate an amount of data to be transmitted on the first logical channel, and min denotes obtaining a minimum value.

In some embodiments, the device further includes: a third updating unit, configured to: after the allocating the first radio resource to the first logical channel based on the first parameter, update the second token variable according to a formula as follows: $Bd = Bd - LCH1\_ASG1$.

In some embodiments, the device further includes: a fourth updating unit, configured to: after the allocating the first radio resource to the first logical channel based on the first parameter, update the amount of data to be transmitted on the first logical channel and the allocable radio resources according to formulas as follows: $LCH1\_Buf = LCH1\_Buf - LCH1\_ASG1$; and $SG = SG - LCH1\_ASG1$. In which, LCH1_ASG1 denotes the first radio resource, LCH1_Buf is used to indicate the amount of data to be transmitted on the first logical channel, and SG denotes the allocable radio resources.

In some embodiments, the first radio resource is a resource allocated by the terminal device to the first logical channel from allocable radio resources, where the allocable radio resources are radio resources remaining after the terminal device allocates radio resources to a plurality of logical channels based on prioritized bit rates of the plurality of logical channels, and the plurality of logical channels include the first logical channel.

In some embodiments, the first parameter includes a first token variable, and the device further includes: a fifth updating unit, configured to: after the allocating the radio resources to the plurality of logical channels based on the prioritized bit rates of the plurality of logical channels, update the first token variable according to a formula as follows: $Bk = Bk - LCH1\_ASG2$. In which, Bk denotes the first token variable, LCH1_ASG2 denotes a second radio resource, and the second radio resource is a resource allocated by the terminal device to the first logical channel based on the prioritized bit rate.

In some embodiments, the device further includes: a sixth updating unit, configured to: after the allocating the radio resources to the plurality of logical channels based on the prioritized bit rates of the plurality of logical channels, update an amount of data to be transmitted on the first logical channel and the allocable radio resources according to formulas as follows: $LCH1\_Buf = LCH1\_Buf - LCH1\_ASG2$; and $SG = SG - LCH1\_ASG2$. In which, LCH1_Buf is used to indicate the amount of data to be transmitted on the first logical channel, SG denotes the allocable radio resources, LCH1_ASG2 denotes a second radio resource, and the second radio resource is a resource allocated by the terminal device to the first logical channel based on the prioritized bit rate.

In some embodiments, if logical channels participating in radio resource allocation include the first logical channel and a second logical channel, a radio resource is first allocated to the first logical channel, and then a radio resource is allocated to the second logical channel, where a priority of the first logical channel is higher than that of the second logical channel.

FIG. 5 is a schematic diagram of a structure of a communications apparatus according to an embodiment of this application. Dashed lines in FIG. 5 indicate that a unit or module is optional. The apparatus 500 may be configured to implement the methods described in the foregoing method embodiments. The apparatus 500 may be a chip or a terminal device.

The apparatus 500 may include one or more processors 510. The processor 510 may support the apparatus 500 in implementing the methods described in the foregoing method embodiments. The processor 510 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 500 may further include one or more memories 520. The memory 520 stores a program, where the program may be executed by the processor 510, to cause the processor 510 to execute the methods described in the method embodiments. The memory 520 may be independent of the processor 510 or may be integrated into the processor 510.

The apparatus 500 may further include a transceiver 530. The processor 510 may communicate with another device or chip by using the transceiver 530. For example, the processor 510 may transmit data to and receive data from another device or chip through the transceiver 530.

An embodiment of this application further provides a computer-readable storage medium for storing a program. The computer-readable storage medium may be applied to the terminal device provided in embodiments of this application, and the program causes a computer to perform the methods performed by the terminal device in various embodiments of this application.

An embodiment of this application further provides a computer program product. The computer program product includes a program. The computer program product may be applied to the terminal device provided in embodiments of this application, and the program causes a computer to perform the methods performed by the terminal device in various embodiments of this application.

An embodiment of this application further provides a computer program. The computer program may be applied to the terminal device provided in embodiments of this application, and the computer program causes a computer to perform the methods performed by the terminal device in various embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefining" or "pre-configuring" may be implemented by pre-storing corresponding code, tables, or other forms that may be used to indicate related information in devices (for example, including a terminal device and a network device), and a specific implementation thereof is not limited in this application. For example, being predefined may refer to being defined in a protocol.

In embodiments of this application, the "protocol" may indicate a standard protocol in the communications field, which may include, for example, an LTE protocol, an NR protocol, and a related protocol applied to a future communications system. This is not limited in this application.

In embodiments of this application, the term "and/or" describes merely an association relationship between associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution orders. The execution orders of the processes should be determined based on functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1.   A method for wireless communication, comprising:

   determining, by a terminal device, a first parameter based on a resource allocation rate; and
   allocating, by the terminal device, a first radio resource to a first logical channel based on the first parameter,
   wherein the resource allocation rate is associated with a satisfaction level of the first logical channel.

2.   The method according to claim 1, wherein the resource allocation rate comprises a satisfying bit rate, the first parameter comprises a first token variable, and the determining, by the terminal device, the first parameter based on the resource allocation rate comprises:

   the first token variable meeting formulas as follows:

$$\mathrm{Bk = Bk + SBR \times T, \ and \ Bk = min(Bk, SBR\_BS),}$$

   wherein Bk denotes the first token variable, SBR denotes the satisfying bit rate, SBR_BS denotes a size of a first token bucket, T denotes a time interval between two calculations of the first parameter, and min denotes obtaining a minimum value.

3.   The method according to claim 2, wherein the allocating, by the terminal device, the first radio resource to the first logical channel based on the first parameter comprises:

   the first radio resource meeting a formula as follows:

$$LCH1\_ASG1 = min(SG,Bk,LCH1\_Buf),$$

wherein LCH1_ASG1 denotes the first radio resource, SG denotes allocable radio resources, LCH1_Buf is used to indicate an amount of data to be transmitted on the first logical channel, and min denotes obtaining a minimum value.

4. The method according to claim 3, wherein after the allocating, by the terminal device, the first radio resource to the first logical channel based on the first parameter, the method further comprises:
updating the first token variable according to a formula as follows:

$$Bk = Bk - LCH1\_ASG1.$$

5. The method according to claim 3 or 4, wherein after the allocating, by the terminal device, the first radio resource to the first logical channel based on the first parameter, the method further comprises:
updating the amount of data to be transmitted on the first logical channel and the allocable radio resources according to formulas as follows:

$$LCH1\_Buf = LCH1\_Buf - LCH1\_ASG1;$$

and

$$SG = SG - LCH1\_ASG1.$$

6. The method according to claim 1, wherein the resource allocation rate comprises an incremental bit rate, the first parameter comprises a second token variable, and the determining, by the terminal device, the first parameter based on the resource allocation rate comprises:

the second token variable meeting formulas as follows:

$$Bd = Bd + delta\_BR \times T, \text{ and } Bd = min(Bd,delta\_BS),$$

wherein delta_BR denotes the incremental bit rate, delta_BS denotes a size of a second token bucket, T denotes a time interval between two calculations of the first parameter, and min denotes obtaining a minimum value.

7. The method according to claim 6, wherein the allocating, by the terminal device, the first radio resource to the first logical channel based on the first parameter comprises:

the first radio resource meeting a formula as follows:

$$LCH1\_ASG1 = min(SG,Bd,LCH1\_Buf),$$

wherein LCH1_ASG1 denotes the first radio resource, SG denotes allocable radio resources, LCH1_Buf is used to indicate an amount of data to be transmitted on the first logical channel, and min denotes obtaining a minimum value.

8. The method according to claim 7, wherein after the allocating, by the terminal device, the first radio resource to the first logical channel based on the first parameter, the method further comprises:
updating the second token variable according to a formula as follows:

$$Bd = Bd - LCH1\_ASG1.$$

9. The method according to claim 7 or 8, wherein after the allocating, by the terminal device, the first radio resource to the first logical channel based on the first parameter, the method further comprises:

updating the amount of data to be transmitted on the first logical channel and the allocable radio resources according to formulas as follows:

$$LCH1\_Buf = LCH1\_Buf - LCH1\_ASG1;$$

and

$$SG = SG - LCH1\_ASG1,$$

wherein LCH1_ASG1 denotes the first radio resource, LCH1_Buf is used to indicate the amount of data to be transmitted on the first logical channel, and SG denotes the allocable radio resources.

10. The method according to any one of claims 1 to 9, wherein the first radio resource is a resource allocated by the terminal device to the first logical channel from allocable radio resources,
wherein the allocable radio resources are radio resources remaining after the terminal device allocates radio resources to a plurality of logical channels based on prioritized bit rates of the plurality of logical channels, and the plurality of logical channels comprise the first logical channel.

11. The method according to claim 10, wherein the first parameter comprises a first token variable, and after the terminal device allocates the radio resources to the plurality of logical channels based on the prioritized bit rates of the plurality of logical channels, the method further comprises:

updating the first token variable according to a formula as follows:

$$Bk = Bk - LCH1\_ASG2,$$

wherein Bk denotes the first token variable, LCH1_ASG2 denotes a second radio resource, and the second radio resource is a resource allocated by the terminal device to the first logical channel based on the prioritized bit rate.

12. The method according to claim 10 or 11, wherein after the terminal device allocates the radio resources to the plurality of logical channels based on the prioritized bit rates of the plurality of logical channels, the method further comprises:

updating an amount of data to be transmitted on the first logical channel and the allocable radio resources according to formulas as follows:

$$LCH1\_Buf = LCH1\_Buf - LCH1\_ASG2;$$

and

$$SG = SG - LCH1\_ASG2,$$

wherein LCH1_Buf is used to indicate the amount of data to be transmitted on the first logical channel, SG denotes the allocable radio resource, LCH1_ASG2 denotes a second radio resource, and the second radio resource is a resource allocated by the terminal device to the first logical channel based on the prioritized bit rate.

13. The method according to any one of claims 1 to 12, wherein in a case that logical channels participating in radio resource allocation comprise the first logical channel and a second logical channel, first allocating a radio resource to the first logical channel, and then allocating a radio resource to the second logical channel, wherein a priority of the first logical channel is higher than that of the second logical channel.

14. A terminal device, comprising:

a determining unit, configured to determine a first parameter based on a resource allocation rate, wherein the resource allocation rate is associated with a satisfaction level of a first logical channel; and
an allocation unit, configured to allocate a first radio resource to the first logical channel based on the first parameter.

15. The device according to claim 14, wherein the resource allocation rate comprises a satisfying bit rate, the first parameter comprises a first token variable, and the determining the first parameter based on the resource allocation rate comprises:

the first token variable meeting formulas as follows:

$$Bk = Bk + SBR \times T, \text{ and } Bk = \min(Bk, SBR\_BS),$$

wherein Bk denotes the first token variable, SBR denotes the satisfying bit rate, SBR_BS denotes a size of a first token bucket, T denotes a time interval between two calculations of the first parameter, and min denotes obtaining a minimum value.

16. The device according to claim 15, wherein the allocating the first radio resource to the first logical channel based on the first parameter comprises:

the first radio resource meeting a formula as follows:

$$LCH1\_ASG1 = \min(SG, Bk, LCH1\_Buf),$$

wherein LCH1_ASG1 denotes the first radio resource, SG denotes allocable radio resources, LCH1_Buf is used to indicate an amount of data to be transmitted on the first logical channel, and min denotes obtaining a minimum value.

17. The device according to claim 16, wherein the device further comprises:
a first updating unit, configured to: after the allocating the first radio resource to the first logical channel based on the first parameter, update the first token variable according to a formula as follows:

$$Bk = Bk - LCH1\_ASG1.$$

18. The device according to claim 16 or 17, wherein the device further comprises:
a second updating unit, configured to: after the allocating the first radio resource to the first logical channel based on the first parameter, update the amount of data to be transmitted on the first logical channel and the allocable radio resources according to formulas as follows:

$$LCH1\_Buf = LCH1\_Buf - LCH1\_ASG1;$$

and

$$SG = SG - LCH1\_ASG1.$$

19. The device according to claim 14, wherein the resource allocation rate comprises an incremental bit rate, the first parameter comprises a second token variable, and the determining the first parameter based on the resource allocation rate comprises:

the second token variable meeting formulas as follows:

$$Bd = Bd + delta\_BR \times T, \text{ and } Bd = \min(Bd, delta\_BS),$$

wherein delta_BR denotes the incremental bit rate, delta_BS denotes a size of a second token bucket, T denotes a time interval between two calculations of the first parameter, and min denotes obtaining a minimum value.

20. The device according to claim 19, wherein the allocating the first radio resource to the first logical channel based on the first parameter comprises:

the first radio resource meeting a formula as follows:

$$LCH1\_ASG1 = min(SG,Bd,LCH1\_Buf),$$

wherein LCH1_ASG1 denotes the first radio resource, SG denotes allocable radio resources, LCH1_Buf is used to indicate an amount of data to be transmitted on the first logical channel, and min denotes obtaining a minimum value.

21. The device according to claim 20, wherein the device further comprises:
a third updating unit, configured to: after the allocating the first radio resource to the first logical channel based on the first parameter, update the second token variable according to a formula as follows:

$$Bd = Bd - LCH1\_ASG1.$$

22. The device according to claim 20 or 21, wherein the device further comprises:

a fourth updating unit, configured to: after the allocating the first radio resource to the first logical channel based on the first parameter, update the amount of data to be transmitted on the first logical channel and the allocable radio resources according to formulas as follows:

$$LCH1\_Buf = LCH1\_Buf - LCH1\_ASG1;$$

and

$$SG = SG - LCH1\_ASG1,$$

wherein LCH1_ASG1 denotes the first radio resource, LCH1_Buf is used to indicate the amount of data to be transmitted on the first logical channel, and SG denotes the allocable radio resources.

23. The device according to any one of claims 14 to 22, wherein the first radio resource is a resource allocated by the terminal device to the first logical channel from allocable radio resources,
wherein the allocable radio resources are radio resources remaining after the terminal device allocates radio resources to a plurality of logical channels based on prioritized bit rates of the plurality of logical channels, and the plurality of logical channels comprise the first logical channel.

24. The device according to claim 23, wherein the first parameter comprises a first token variable, and the device further comprises:

a fifth updating unit, configured to: after the allocating the radio resources to the plurality of logical channels based on the prioritized bit rates of the plurality of logical channels, update the first token variable according to a formula as follows:

$$Bk = Bk - LCH1\_ASG2,$$

wherein Bk denotes the first token variable, LCH1_ASG2 denotes a second radio resource, and the second radio resource is a resource allocated by the terminal device to the first logical channel based on the prioritized bit rate.

25. The device according to claim 23 or 24, wherein the device further comprises:

a sixth updating unit, configured to: after the allocating the radio resources to the plurality of logical channels based on the prioritized bit rates of the plurality of logical channels, update an amount of data to be transmitted on the first logical channel and the allocable radio resources according to formulas as follows:

$$LCH1\_Buf = LCH1\_Buf - LCH1\_ASG2;$$

and

$$SG = SG - LCH1\_ASG2,$$

wherein LCH1_Buf is used to indicate the amount of data to be transmitted on the first logical channel, SG denotes the allocable radio resources, LCH1_ASG2 denotes a second radio resource, and the second radio resource is a resource allocated by the terminal device to the first logical channel based on the prioritized bit rate.

26. The device according to any one of claims 14 to 25, wherein in a case that logical channels participating in radio resource allocation comprise the first logical channel and a second logical channel, first allocating a radio resource to the first logical channel, and then allocating a radio resource to the second logical channel, wherein a priority of the first logical channel is higher than that of the second logical channel.

27. A terminal device, comprising a memory and a processor, wherein the memory is configured to store a program, and the processor is configured to invoke the program in the memory to execute the method according to any one of claims 1 to 13.

28. An apparatus, comprising a processor, configured to invoke a program from a memory to execute the method according to any one of claims 1 to 13.

29. A chip, comprising a processor, configured to invoke a program from a memory to cause a device installed with the chip to execute the method according to any one of claims 1 to 13.

30. A computer-readable storage medium, wherein the computer-readable storage medium stores a program, and the program causes a computer to execute the method according to any one of claims 1 to 13.

31. A computer program product, comprising a program that causes a computer to execute the method according to any one of claims 1 to 13.

32. A computer program, wherein the computer program causes a computer to execute the method according to any one of claims 1 to 13.

100

110

120

120

FIG. 1

LCH_1

LCH_2

Maximum
rate

Minimum
rate

Starvation    Satisfied    Saturated

FIG. 2

A terminal device determines a first parameter based on a resource allocation rate — S310

The terminal device allocates a first radio resource to a first logical channel based on the first parameter — S320

FIG. 3

Terminal device 400

Determining unit 410

Allocation unit 420

FIG. 4

Apparatus 500

Processor 510

Memory 520

Transceiver 530

FIG. 5

**EP 4 783 697 A1**

## INTERNATIONAL SEARCH REPORT

| International application No. |
|---|
| **PCT/CN2023/119652** |

| A. | CLASSIFICATION OF SUBJECT MATTER |
|---|---|
| | H04W 72/0457(2023.01)i |

According to International Patent Classification (IPC) or to both national classification and IPC

| B. | FIELDS SEARCHED |
|---|---|

Minimum documentation searched (classification system followed by classification symbols)

    IPC：H04W

Documentation searched other than minimum documentation to the extent that such documents are included in the fields searched

Electronic data base consulted during the international search (name of data base and, where practicable, search terms used)

    CNABS; CNTXT; CNKI; VEN; WOTXT; USTXT; EPTXT; 3GPP: 终端, 用户设备, 资源, 分配, 速率, 速度, 逻辑信道, 令牌, 变量, 满意, 关联, 饱和, 饥饿, 逻辑信道优先级, 逻辑信道优先化, terminal, UE, resource, allocation, speed, LCP, LCH, logical, token, PBR, Bj, SBR, delta_BR

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113055137 A (DATANG MOBILE COMMUNICATIONS EQUIPMENT CO., LTD.) 29 June 2021 (2021-06-29)<br>    description, paragraphs [0003]-[0350] | 1, 14, 27-32 |
| A | CN 101827398 A (CHINA MOBILE COMMUNICATIONS GROUP CO., LTD) 08 September 2010 (2010-09-08)<br>    entire document | 1-32 |
| A | US 2011182251 A1 (QUALCOMM INC.) 28 July 2011 (2011-07-28)<br>    entire document | 1-32 |
| A | US 2018098333 A1 (QUALCOMM INC.) 05 April 2018 (2018-04-05)<br>    entire document | 1-32 |

☐ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 November 2023** | **05 December 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/119652**

| Patent document cited in search report | | | Publication date (day/month/year) | Patent family member(s) | Publication date (day/month/year) |
|---|---|---|---|---|---|
| CN | 113055137 | A | 29 June 2021 | None | |
| CN | 101827398 | A | 08 September 2010 | None | |
| US | 2011182251 | A1 | 28 July 2011 | None | |
| US | 2018098333 | A1 | 05 April 2018 | None | |

Form PCT/ISA/210 (patent family annex) (July 2022)